# EUROPÄISCHE PATENTANMELDUNG

(11) **EP 4 112 660 A1**
(43) Veröffentlichungstag der Anmeldung: **04.01.2023**
(21) Anmeldenummer: 21183067.4
(22) Anmeldetag: 01.07.2021
(51) Int. Cl.: C08F 255/02, C09J 151/06

(54) **VERARBEITUNGSOPTIMIERTE, REAKTIVE POLYMERZUSAMMENSETZUNG**

(71) Anmelder: Clariant International Ltd, 4132 Muttenz (CH)
(72) Erfinder: SCHWABE, Jeremia, 86150 Augsburg (DE); HAUCK, Erik, 66953 Pirmasens (DE)
(74) Vertreter: Silber, Anton

(57) **Zusammenfassung**

Die Erfindung betrifft ein Silan-modifiziertes Polypropylen-Copolymer mit einem Siliziumgehalt zwischen 1 und 5 Gew.-%, einer Schmelzenthalpie zwischen 20 J/g und 35 J/g und einer Schmelzviskosität bei 170°C zwischen 500 mPas und 4500 mPas. Desweiteren betrifft die Erfindung verarbeitungsoptimierte, reaktive Schmelzklebeformulierungen umfassend dieses Silan-modifizierte Polymer und die Verwendung dieser Schmelzklebeformulierungen für die Verklebung verschiedener Substrate. Ausserdem betrifft die Erfindung ein Verfahren zur Herstellung dieser Silanmodifizierten Polypropylen-Coplymere.

## Beschreibung

### Technisches Gebiet der Erfindung

Die Erfindung betrifft ein Silan-modifiziertes Polypropylen-Copolymer mit einem Siliziumgehalt zwischen 1 und 5 Gew.-%, einer Schmelzenthalpie zwischen 20 J/g und 35 J/g und einer Schmelzviskosität bei 170°C zwischen 500 mPas und 4500 mPas. Desweiteren betrifft die Erfindung verarbeitungsoptimierte, reaktive Schmelzklebeformulierungen umfassend dieses Silan-modifizierte Polypropylen-Copolymer und die Verwendung dieser Schmelzklebeformulierungen für die Verklebung verschiedener Substrate. Ausserdem betrifft die Erfindung ein Verfahren zur Herstellung dieser Silan-modifizierten Polypropylen-Coplymere.

### Hintergrund der Erfindung

Teilkristalline Poly-alpha-Olefine dienen vielfach als Klebrohstoffe für eine breite Palette von Anwendungen. Der Einsatzbereich erstreckt sich vom Hygienesektor über Laminierungen und Verpackungskleber bis zum konstruktiven Kleben und Verwendungen in der Holzverarbeitung.

Durch Pfropfung mit einem vernetzungsfähigen Agens wie z.B. einem Alkoxysilan kann die Kohäsion, Adhäsion, mechanische Stabilität sowie die Wärmebeständigkeit von unmodifizierten Poly-alpha-Olefine verändert werden, da durch die Vernetzung der Polymerketten untereinander die makromolekularen Eigenschaften verändert werden und das aufgepfropfte Alkoxysilyan weiterhin die kovalente Einbindung reaktiver Oberflächengruppen (wie z. B. -OH) in eine Verklebung ermöglicht.

Eine radikalisch induzierte Pfropfung teilkristalliner Poly-alpha-Olefine mit Silan-Gruppen führt zu einem Kettenabbau des ungepfropften Polymers, wobei häufig nur sehr geringe Funktionalisierungsraten erzielt werden und Pfropfprodukte mit einem stark wachsartigen Charakter gebildet werden (z.B WO 89/11513), die für stabile Verklebungen nicht geeignet erscheinen.

Das gilt auch für die radikalisch induzierte Pfropfreaktion eines Polypropylens oder eines propylenreichen Copolymers, bei der bekanntermaßen ebenfalls Kettenspaltungsreaktionen stattfinden, wodurch die Molmasse (und damit auch die Schmelzviskositat) des Polymers abgebaut wird. Entsprechende Polymere mit hohen Funktionalisierungsraten weisen daher zwangsläufig sehr niedrige Molmassen/Schmelzviskositaten auf und sind für viele Applikationsbereiche nicht geeignet.

Desweiteren bewirkt die nachfolgenden Vernetzung der abgebauten Ketten durch die Silan-Gruppen eine Veränderung der mechanischen Eigenschaften, die im Extremfall zu steifen, hochfesten Materialien mit geringer Versprödungstemperatur führen kann.

In der WO 2007/008765 (Dow) wird der Einsatz von niedrigviskosen, silangepfropften Poly(ethylen-co-1-olefin)-Polymeren als Klebrohstoff beschrieben. Die Polymere, die zur Modifizierung eingesetzt werden, weisen einen Ethylengehalt von mindestens 50 Mol-% Ethylen auf sowie bevorzugt eine Polydispersität von 1 bis 3,5, wobei die gesamte Bandbreite mit 1 bis 5 angegeben wird. Sie zeigen eine niedrige Schmelzviskositat von minimal 2.000 und maximal 50.000 cP bei 177 °C. Als 1-Olefin-Comonomere werden unter anderem zahlreiche höhere 1-Olefine wie z. B. 1-Hexen und 1-Octen genannt. Die silangepfropften Polymere weisen niedrige Versagenstemperaturen in der PAFT und SAFT-Analytik auf. Die Verwendung von Polyolefinen mit hohem Ethylenanteil bedeutet zwangsläufig das Vorhandensein von langen Ethylenblöcken im Polymer. Dies wiederum führt zu schlechten Benetzungs- und Haftungseigenschaften auf vielen Kunststoffoberflächen, so dass sehr viele Verklebungsprobleme nicht optimal gelöst werden können. Zudem neigen lange Polyethylensequenzen zur peroxidischen Vernetzung, wodurch eine Gelbildung unvermeidlich ist. Die ungepfropften Basispolymere weisen eine relativ geringe Molmasse und Schmelzviskositat von maximal 50.000 cP bei 177°C auf.

Ebenfalls beschrieben wird der Einsatz von kristallinen und teilkristallinen Poly(propylen-co-1-olefin)polymeren, die sich ebenfalls für die Pfropfung eignen sollen. Diese weisen einen Propylengehalt von mindestens 50 Mol-% sowie bevorzugt eine Schmelzviskositat von maximal 50.000 cP bei 170°C (vor der Pfropfung und nach der Pfropfung) sowie eine Polydispersität von 1 bis 3,5 auf. Die Kristallinität wird mit 2-60% (d. h. 3-100 J/g) angegeben. Allerdings gibt es keine Beispiele zu diesen als bevorzugt genannten Polypropylen-basierten Copolymeren. Es wurden auch keine weiteren Untersuchungen an Polymeren vorgenommen, die eine Schmelzenthalpie zwischen 20 und 35 J/g und eine Viskosität zwischen 500 und 4500 mPas aufweisen. Somit werden in der WO 2007/008765 weder spezielle Merkmalskombinationen noch die aus diesen resultierenden vorteilhaften Verarbeitungs- und Haftungseigenschaften thematisiert.

In der EP0827994 (Huels) wird die Verwendung von silangepfropften, amorphen Poly(alpha-Olefinen) als feuchtigkeitsvernetztende Klebrohstrohstoffe oder Klebstoffe beschrieben. Als Basispolymere werden ataktisches Polypropylen (aPP), ataktisches Poly(1-buten) oder vorzugsweise Co- bzw. Terpolymere aus C4-C10 alpha-Olefinen (0-95 Gew.-%), Propen (5-100 Gew.-%) und Ethylen (0-20 Gew.-%) eingesetzt. Das in den Beispielen dargestellte silanmodifizierte APAO-Terpolymer weist einen Erweichungspunkt von 98 °C, eine gewichtsmittleres Molekulargewicht von 38.000 g/mol und eine Schmelzviskositat von 6000 mPas auf. Die Pfropfung führte zu einer Abnahme des PDIs um mehr als 35% und die Abnahme der Viskosität beträgt 88%. Auf die Verarbeitungseigenschaften in Verbindung mit den mechanischen Eigenschaften wird nicht näher eingegangen.

DE10338344A1 (Clariant) betrifft radikalisch mit einer Silanverbindung modifizierte, teilkristalline Polyolefin-Homo- oder Copolymere mit einer Viskosität, gemessen bei 170°C, zwischen 10 und 50.000 MPas und einer Schmelzwärme größer 10 J/g. Die Beispiele offenbaren Polyolefine mit Schmelzviskositäten bei 170°C von unter 1000 mPas, Tropfpunkten über 110°C und Schmelzwärmen von mindestens 60 J/g. Sie eignen sich als Bestandteil von Schmelzklebeformulierungen. Die Kombination niedrieger Schmelzviskositäten mit Schmelzwärmen zwischen 20 und 35 J/g werden nicht offenbart.
Die Silan-modifizierten kristallinen Polyolefinwachse werden mittels Metallocenkatalyse hergestellt und weisen einen hohen Propylenanteil auf.

Bei Schmelzklebstoffformulierungen umfassend Silan-modifizierte Polyolefine ist das Verfahren zur Verklebung zweistufig. Um Verarbeitungsprobleme zu vermeiden und eine einfachen Auftragung gewährleisten zu können, ist der Fachmann auf der Suche nach Schmelzklebstoffformulierungen mit einer niedrigen Viskosität, um den Schmelzklebstoff bei relativ geringen Temperaturen mit Druck auftragen zu können. Sobald der Klebstoff aufgetragen ist, wird die Vernetzung eingeleitet, wodurch die Viskosität erhöht und die Kohäsion der Verklebung aufgebaut wird, die die mechanische Stabilität für die Endklebung gewährleisten sollen.

Hier ist jedoch zu berücksichtigen, dass sehr niedrigviskose Produkte mit Viskositäten unter 8.000 mPas für gewöhnlich Defizite bei den mechanischen Eigenschaften wie E-Modul, Festigkeit und Bruchdehnung aufweisen, da durch die sehr kurzen Kettenlängen weniger Polymerverschlaufungen (Entanglements) vorhanden sind und die Produkte eher wachsartige Eigenschaften aufweisen. Weiterhin kommt es durch die sehr kurzen Kettenlängen bei der Vernetzung zu einer raschen Versprödung des Materials, da die kurzen, untereinander vernetzten Polymerketten nur noch eine geringe Flexibilität aufweisen. Somit lehrt der Stand der Technik von dem Einsatz sehr niedrigviskoser Basispolymere weg und empfiehlt die Verwendung größerer Mengen Klebrigmacher in Verbindung mit höherviskosen silanisierten Polyolefinen.

Der adhäsive Klebrigmacher beeinflusst die Viskosität der Verklebung sowie die initiale Haftung und ist häufig ein Harz. Diese Harze sind z.B. niedermolekulare Produkte aus dem C5- oder C9-Strom der Erdölaufbereitung, enthalten oft Aromaten und haben für gewöhnlich eine Glasübergangstemperatur, die über Raumtemperatur liegt.

Somit erhöht die Beimischung von Harzen in Schmelzklebstoffformulierungen die Glastemperaturen der Formulierungen, so dass entsprechende Schmelzklebstoffe unter verringerter Kälteflexibilität leiden und der Temperaturbereich, in dem der Schmelzklebstoff verwendet werden kann, eingeschränkt ist.

WO2010018027A1 (Evonik) beschreibt silanmodifizierte Polypropylenco- und terpolymere mit hohem Funktioalisierungsgrad mit einem Gehalt an Poly(ethylen)-Triaden von maximal 2.5 Gew.-%, Schmelzenthalpien von 9 - 20 J/g und einer Xylollöslichkeit von größer 96 Gew.-%, wobei die besten Ergebnisse mit Terpolymeren umfassend Ethylen und 1-Buten erzielt werden konnten. Es werden viele Beispielformulierungen für verschiedene Verklebungen erwähnt, die diese modifizierten Polyolefine enthalten. Diese Formulierungen bieten zwar eine relativ gute mechanische Stabilität nach der Verklebung, jedoch sind relativ hohe Mengen an Klebrigmacher erforderlich, um gute Verarbeitungeigenschaften und eine ausreichende initiale Klebrigkeit zu gewährleisten. Der niedrigste Anteil der modifizierten Polyolefine in einer Formulierung wird in einer Beispielrezeptur für Kantenumleimung mit 24,7 Gew.-% angegeben. Alle anderen Beispiele enthalten 30 Gew.-% oder mehr.

Zudem lehrt die WO2010018027A1, dass eine peroxidisch induzierte Pfropfreaktion die Polydispersität der verwendeten Polymere weiter reduziert und schließt daraus, dass die modifizierten Polymere eine Polydispersität von deutlich kleiner 3,5 aufweisen, was angeblich zu diversen Nachteilen vor allem bei den Verarbeitungseigenschaften führt. Desweiteren lehrt das Dokument, dass die Verwendung relativ niedermolekularer Basispolymere generell zu eher geringen Funktionalisierungsraten führt.

EP3287276A1 (Sika) beschreibt Schmelzklebstoffzusammensetzungen umfassend ein silanmodifiziertes Poly-alpha-Olefin, das bei 25°C fest ist, einem nichtmodifiziertem amorphen C3/C2-Copolymer-Wachs mit einem Erweichungspunkt < 120°C und einem Paraffin-Wachs mit einem Erweichungspunkt von 80 - 130 °C. Die Klebstoffzusammensetzungen enthalten verschiedene silanmodifizierte Poly-alpha-Olefine, wobei die Summe derer in der Formulierung > 55 Gew.-% ist.

WO2009133093 (Sika) beschreibt Heißschmelzklebstoffzusammensetzungen mit einer verlängerten Offenzeit, umfassend ein silanmodifiziertes, bei 25°C festes Poly-alpha-Olefin und ein Weichharz mit einem Schmelz- oder Erweichungspunkt von 10°C - 40°C. Die Beispiele der Formulierungen enthalten 65 Gew.-% silanmodifiziertes Poly-alpha-Olefin. Der Anteil aller silangepfropften Poly-alpha-Olefine beträgt über 50 Gew.-%, bevorzugt zwischen 60 und 90 Gew.-%.

Somit zeigt sich, dass silanmodifizierten Klebstoffrezepturen üblicherweise Klebrigmacher und niedrigviskose Komponenten in relativ großen Mengen zugesetzt werden müssen, um eine der Verarbeitung angemessenen Viskosität und die initiale Haftung der Verklebung einzustellen. Ohne diese Zugabe weisen silanisierte Polyolefine eine hohe Viskosität auf, die das Anwendungsspektrum einschränkt und den Klebstoffformulierer vor zusätzliche verfahrenstechnische und materialspezifische Probleme stellt. Deshalb ist der Klebstoffformulierer stets auf der Suche nach Lösungen, die für ein ausgewogenes, breites Anwendungsspektrum geeignet sind, mit möglichst wenigen Einzelkomponenten auskommen und den Anteil an funktionalen Additiven möglichst gering halten.

Es bestand somit ein Bedarf an funktionalisierten Polyolefinen als und für Schmelzklebemassen, die sich durch ihre verbesserten Materialeigenschaften schon bei niedrigen Temperaturen (unter 170 °C) leicht verarbeiten und auftragen lassen, ohne dass viel Harz oder Klebrigmacher eingesetzt werden muss, und die trotzdem eine ausreichende initiale Haftung sowie eine flexible und stabile Verklebung und eine hohe Wärmebeständigkeit der Schmelzklebemasse ermöglichen.

### Gegenstand der Erfindung

Überraschenderweise wurde gefunden, dass ein Silan-modfiziertes Polypropylen-Copolymer mit einem Silizium Gehalt zwischen 1 und 5 Gew.-%, bezogen auf die Gesamtmenge des modifizierten Polymers, einer Schmelzviskosität bei 170°C größer als 500 mPas und kleiner als 4500 mPas und einer Schmelzenthalpie größer als 20 J/g und kleiner als 35 J/g, bevorzugt größer als 20 J/g und kleiner als 30 J/g, als Schmelzklebemasse oder als Bestandteil einer Schmelzklebstoffformulierung, der Formulierung als solcher äußerst vorteilhafte Eigenschaften verleihen, die sich unter anderem in deren verbesserter Verarbeitbarkeit wiederspiegeln. Unter Copolymeren im Sinne der Erfindung werden Polymere bezeichnet, die aus zwei oder mehr verschiedenartigen Monomereinheiten zusammengesetzt sind. Das Silan-modfizierte Polypropylen-Copolymer umfasst als weiteres Monomer ein oder mehrere Monomere ausgewählt aus der Gruppe bestehend aus Ethylen und 1-Buten, wobei ein binäres Copolymer bevorzugt ist und Ethylen als Comonomer neben Propylen besonders bevorzugt ist.

Das Silan-modfizierte Polypropylen-Copolymer führt sowohl zu einer sehr guten Verarbeitbarkeit als auch zu sehr guten mechanischen Eigenschaften der Klebung, die sich in einer guten Kohäsion, Adhäsion, Wärmebeständigkeit und Bruchdehnung des Schmelzklebers qualitativ und quantitativ darstellen. Dabei wird ein niedrigerer Anteil der reaktiven silanisierten Komponente in der Formulierung benötigt, um dasselbe Anforderungsprofil des Schmelzklebers betreffend die Wärmebeständigkeit, Kohäsion, Bruchdehnung usw. zu erreichen, als es bei herkömmlichen Formulierungen der Fall wäre. Die vorteilhaften Eigenschaften der Schmelzklebemasse zeigen sich insbesondere auf polaren Substraten.

### Detaillierte Beschreibung der Erfindung

Die Modifikation des unmodifizierten Polypropylen-Copolymers erfolgt durch Pfropfung. Bei der Pfropfung können Nebenreaktionen auftreten, die u.a. zur Kettenspaltung des gepfropften Polymers führen, so dass in der vorliegenden Anmeldung Pfropfung und Modifikation als gleichbedeutend anzusehen sind.

Neben dem beschriebenen Silizium Gehalt zwischen 1 und 5 Gew.%, der Schmelzviskosität bei 170°C von größer als 500 mPas und kleiner als 4500 mPas und der Schmelzenthalpie größer als 20 J/g und kleiner als 35 J/g, bevorzugt größer als 20 J/g und kleiner als 30 J/g, weist das silanmodifiziertes Polypropylen-Copolymer bevorzugt eine Schmelzviskosität auf, die zwischen 10% und 50% der Ausgangsviskosität des unmodifizierten Polypropylens beträgt. Eine entsprechende prozentuale Veränderung der Schmelzviskosität ermöglicht eine besonders einfache Verarbeitbarkeit in Kombination mit einer guten mechanischen Stabilität durch den richtigen Grad an Vernetzung.

Das aufzupfropfende Silan besitzt vorzugsweise olefinische Doppelbindungen sowie eine bis drei direkt mit dem Siliziumatom verbundene Alkoxygruppen. Insbesondere sind die ein oder mehreren Silane ausgewählt aus der Gruppe umfassend Vinyltrimethoxysilan (VTMO), Vinyltriethoxysilan, Vinyl-tris(2-methoxyethoxy)silan, 3-Methacryloxypropyltrimethoxysilan (MEMO; H2C=C(CH3)COO(CH2)3-Si(OCH3)3), 3-Methacryloxypropyltriethoxysilan, Vinyldimethylmethoxysilan und/oder Vinylmethyldibutoxysilan. Ganz besonders bevorzugt ist das Silan Vinyltrimethoxysilan.

Zur Einstellung der gewünschten mechanischen Eigenschaften ist es vorteilhaft, wenn das Polypropylen-Copolymer Backbone des Silan-modifizierten Polypropylen-Copolymers ein gewichtsmittleres Molekulargewicht, gemessen nach ISO 16014-1, von größer als 10.000 und kleiner als 30.000 g/mol, bevorzugt größer als 10.000 und kleiner als 20.000 g/mol, da in diesem Molekulargewichtsbereich die Polymerketten ausreichend funktionalisiert wurden und entsprechend stabil vernezt werden können, sie aber immer noch genügend Flexibilität aufweisen.

Bevorzugt weist das silan-modifizierte Polypropylen-Copolymer einen Polydispersitätsindex (PDI) kleiner als 2,5 auf. Vorzugsweise hat sich dieser durch die Pfropfung erhöht und die Erhöhung gegenüber dem ungepfropften Polymer beträgt mindestens 20 %. Diese Änderung des PDIs durch die Propfung stellt sich offenbar nur bei silanmodifizierten Polypropylen-basierten Copolymeren ein, bei der der radikalisch-induzierte Kettenabau in einem Umfang auftritt, der zu einer ausreichenden Viskositätsabsenkung führt, die aber trotzdem gering genug ist, um die spätere Vernetzung in einem Ausmaß zuzulassen, der sowohl eine hohe Flexibiltät als auch eine ausreichende Festigkeit der Verklebung gewährleistet. Diese Erhöhung des PDIs war völlig überraschend, da ein radikalisch-induzierter Kettenabbau für gewöhnlich zu einer Reduktion des PDI's führt.

Vorzugsweise weist das Silan-modifizierte Polypropylen-Copolymer einen Erweichungspunkt zwischen 85 und 95°C. Silan-modifizierte PolypropylenCopolymere, die ihren Erweichungspunkt innerhalb dieses Bereichs haben, weisen sowohl für die Wärmebeständigkeit als auch für die Verarbeitbarkeit hinreichend gute Eigenschaften auf.

Weiterhin besitzt das silan-modifizierte Polypropylen-Copolymer vorzugsweise eine Dichte größer 0,900 g/cm3.

Bevorzugt weist das Silan-modifizierte Polypropylen-Copolymer eine mm-Triade des Propylenanteils auf, die im Bereich kleiner gleich 90 Mol% liegt und eine rr-Triade, die mindestens 5 Mol% beträgt. Ein Silan-modifiziertes Polypropylen-Copolymer, das diese Mikrostruktur aufweist, zeigt die gewünschten Verabeitungseigenschaften und mechanischen Eigenschaften.

In einer bevorzugten Ausführungsform wurde das Silan-modifizierte Polypropylen-Copolymer mit Hilfe eines Metallocenkatalysators hergestellt.

In einer bevorzugten Ausführungsform weist das unmodifizierte Edukt des Silan-modifizierten Polypropylen-Copolymers einen Propylenanteil von mindestens 60 Mol.-% Propylen, besonders bevorzugt zwischen 70 und 90 Mol.-% Propylen auf. In diesem Bereich ist der Comonomer Anteil groß genug um eine Versprödung des Materials zu verhindern, aber auch noch nicht so groß, dass die Haftungseigenschaften auf Grund eines zu hohen Ethylenanteils abnehmen würden.

Besonders bevorzugt weist das unmodifizierte Edukt des Silan-modifiziertes Polypropylen-Copolymers einen Propylenanteil, welcher mit Hilfe eine ¹³C-NMRs ermittelt wurde, von mindestens 60 Mol.-% Propylen auf.

Darüber hinaus ist ein weiterer Gegenstand der Erfindung ein Verfahren zur Herstellung eines Silan-modifizierten Polypropylencopolymers gemäß Anspruch 1, umfassend die Schritte
a) Bereitstellen eines Polypropylen-Copolymers
b) Zugabe der Pfropfkomponente und des radikalischen Initiators.
c) Verdampfen des überschüssigen Monomers,
dadurch gekennzeichnet, dass es durch die Pfropfrektion zu einer Abnahme der Schmelzviskosiät von 50 - 90% und einer Erhöhung des PDIs um mindestens 20% des Pfropfproduktes im Vergleich zum Ausgangsprodukt kommt.

Bevorzugt setzt man in dem erfindungsgemäßen Verfahren ein unmodifiziertes Polypropylen-Copolymer ein, das eine Schmelzviskosität, gemessen nach DIN 53019 bei 170°C, zwischen 500 und 7.000 mPas, bevorzugt zwischen 700 und 5.000 mPas, besonders bevorzugt zwischen 800 und 4.000 mPas, und eine Schmelzenthalpie, gemessen nach ISO 11357-3, zwischen 30 J/g und 55 J/g, bevorzugt zwischen 30 und 50 J/g, besonders bevorzugt zwischen 30 und 45 J/g, aufweist.

Ein weiterer Gegenstand der Erfindung ist eine Schmelzklebeformulierung, umfassend ein erfindungsgemäßes Silan-modifiziertes Polypropylen-Copolymer und ein oder mehrere Basispolymere ausgewählt aus der Gruppe bestehend aus unmodifizierten Polyolefinen und unmodifizierten, thermoplastischen Styrolblockcopolymeren (TPE-S), wobei das Silan-modifiziertes Polypropylen-Copolymer und das Basispolymer mindestens 50 Gew.-% der Schmelzklebeformulierung bilden und das Silan-modifiziertes Polypropylen-Copolymer zu höchstens 30 Gew.-%, bezogen auf das Gesamtgewicht der Schmelzklebeformulierung, eingesetzt wird.

Bei den nicht-modifizierten Polyolefinen handelt es sich vorzugsweise um kristalline oder teilkristalline Polyolefine oder amorphe Polyolefine (APAO), Ethylen-VinylacetatCopolymere (EVA) und Polyisobutylen (PIB) wobei die Polyolefine besonders bevorzugt aus C3/C2-Copolymeren gebildet werden und es sich bei den nicht-modifizierten Styrolblockcopolymeren bevorzugt um SBS, SEBS, SEPS, SEEPS und MBS handelt.

Vorzugsweise weist die Schmelzklebeformulierung eine Schmelzviskosität bei 170°C, gemessen gemäß DIN 53019, von kleiner 5000 mPas und eine Zugfestigkeit von mindestens 4 MPa auf, da eine Schmelzklebemasse mit diesen Eigenschaften ein Optimum zwischen Verarbeitbarkeit und mechanischer Stabilität darstellen.

Die erfindungsgemäße Schmelzklebeformulierung kann synthetische und/oder natürliche Harze, insbesondere Klebharze, synthetische und/oder natürliche Öle, anorganische und/oder organische, synthetische und/oder natürliche Polymere, die wahlweise elektrisch leitfahig oder isolierend sein können, enthalten.

Insbesondere umfasst die erfindungsgemäße Schmelzklebeformulierung klebrigmachende Harze (Klebrigmacher), wobei die Harze eingesetzt werden, um bestimmte Eigenschaften der Klebschicht, insbesondere die Klebrigkeit und/oder Haftung, das Fließ- und Kriechverhalten der Klebschicht und/oder die Klebstoffviskosität an besondere Anforderungen anzupassen. Es kann sich dabei um Naturharze und/oder Kunstharze handeln. Im Falle von Naturharzen enthalten diese Naturharze als Hauptbestandteil Abietinsäure (z. B. Kollophonium). Weiterhin kann es sich bei den Harzen um Terpen- bzw. Polyterpenharze, Petroleumharze und/oder Kumaron-Inden-Harze handeln, wobei es sich insbesondere um sogenannte C5-Harze und/oder C9-Harze und/oder um Mischpolymerisate aus C5-/C9 Harzen handelt.

Der Anteil der Klebrigmacher in der erfindungsgemäßen Schmelzklebemasse beträgt maximal 35 Gew.-% Klebrigmacher, besonders bevorzugt zwischen 1 und 30 Gew.-% und insbesondere bevorzugt zwischen 3 und 20 Gew.-%, bezogen auf die Gesamtformulierung, da die für die Verarbeitung bevorzugte Viskosität der Schmelzklebemasse auch mit niedrigen Mengen an Harz erreicht werden kann und diese Mengen in der erfindungsgemäßen Schmelzklebemasse genügen, um eine ausreichende, initiale Haftung zu gewährleisten.

Die erfindungsgemäße Schmelzklebemasse kann weitere Bestandteile enthalten, die zur Erzielung spezieller Eigenschaften, wie z. B. Verformungsfähigkeit, Haftungsvermögen, Verarbeitungsfähigkeit, Vernetzungsgeschwindigkeit, Vernetzungsdichte, (Schmelz- bzw. Lösungs-) Viskosität, Festigkeit, Kristallisationsgeschwindigkeit, Klebrigkeit, Lagerstabilitat usw. notwendig sind.

Besonders bevorzugt enthält die Schmelzklebeformulierung, bezogen auf ihre Gesamtmasse, 40 - 80 Gew.-% des Basispolymers, 10 - 30 Gew.-% des Polypropylencopolymers und 10 - 30 Gew.-% Klebrigmacher. Bei einer Formulierung mit diesen Gewichtsverhältnissen kommen die bevorzugten Eigenschaften in optimaler Weise zum Tragen und es wird ein Schmelzkleber mit einem besonders ausgeowgenem Eigenschaftsprofil zur Verfügung gestellt.

Der Anteil der weiteren Bestandteile liegt in einer besonderen Ausführungsform der vorliegenden Erfindung insbesondere bevorzugt bei maximal 10 Gew.-%. Dies hat den Vorteil, dass die Materialeigenschaften der Klebstoffformulierung im Wesentlichen die des verwendeten erfindungsgemäßen Polymers sind. Eine solche Klebstoffformulierung lasst sich mit sehr geringem Aufwand herstellen.

Bei den weiteren Bestandteilen kann es sich um Vernetzungsbeschleuniger, insbesondere um Silanolkondensationskatalysatoren, um anorganische und/oder organische Füllstoffe, die wahlweise elektrisch leitfahig oder isolierend sein können, anorganische und/oder organische Pigmente, die wahlweise elektrisch leitfahig oder isolierend sein können, um anorganische und/oder organische, synthetische und/oder natürliche Fasern, die wahlweise elektrisch leitfahig oder isolierend sein können, anorganische und/oder organische Stabilisatoren und/oder anorganische und/oder organische Flammschutzmittel handeln.

In einer alternativen Ausführungsform umfasst das Silan-modifizierte Polypropylen-Copolymer oder die Schmelzklebeformulierung einen Vernetzungsbeschleuniger, der in einer Menge von 0.1 - 1 Gew.-%, bezogen auf die Gesamtmenge der Mischung aus Silan-modifiziertem Polypropylen-Copolymer und Vernetzungsbeschleuniger oder der Schmelzklebeformulierung vorliegt.
Dies ist besonders dann bevorzugt, wenn die erfindungsgemäßen Polymere in einer Verklebung eingesetzt werden, die in kurzer Zeit nach der Fügung ihre maximale Belastbarkeit erreichen soll.

Als Vernetzungsbeschleuniger eignen sich eine Vielzahl von chemischen Verbindungen, insbesondere Brönstedt- und/oder Lewissäuren wie z. B. Essigsaure, Itaconsaure, Zink(II)acetat, Cadmiumacetat, Zinkoxid, Zinkstearat, Zink(II)chlorid, Zinn(IV)chlorid, Dibutylzinnoxid, Dibutylzinndilaurat, Wismutcitrat, Wismut(III)oxid, Wismuttitanat, Tetrabutylgermanium, Tetrabutylzinn, Titanborid, Titan(IV)oxid, Titanacetylacetonat, Tributyltitanat, Natriumchlorid, Magnesium(II)chlorid, Zinkacetylacetonat, Zinkmethacrylat, Zinkniobat, Zinn(II)oxid, Zinn(IV)oxid, Zirkon(IV)acetylacetonat, Zirkon(IV)oxid und/oder Zirkon(IV)silikat.

### Messmethoden:

Die aufgeführten Polyolefine wurden analog den aufgeführten Normen charakterisiert. Von der Norm abweichende Charakterisierungen erfolgten gemäß der Beschreibung.

Die Bestimmung der gewichtsmittleren und zahlenmittleren Molekulargewichte M_{w} und Mₙ der Copolymere wurde in 1,3-ortho-Dichlorbenzol durchgeführt und mit einer PP-Kalibrierung bestimmt. Die Messung erfolgte gelpermeationschromatographisch bei einer Temperatur von 135°C. Die Bestimmung erfolgte gemäß ISO 16014-1.

Die Erweichungspunkte wurden nach ASTM D 3104 bestimmt.

Die Dichte wurde gemäß ISO 1183-3:1999 bestimmt.

Die Schmelzviskosität nach DIN 53019 wird wie folgt bestimmt:
Die zu untersuchende Flüssigkeit befindet sich in einem Ringspalt zwischen zwei koaxialen Zylindern, von denen der eine mit konstanter Drehzahl rotiert (Rotor), der andere ruht (Stator). Ermittelt werden die Drehzahl und das Drehmoment, das nötig ist, um den Reibungswiderstand der Flüssigkeit im Ringspalt zu überwinden.
Aus den geometrischen Abmessungen des Systems sowie den ermittelten Drehmoment- und Drehzahlwerten lassen sich die in der Flüssigkeit herrschende Schubspannung und das Geschwindigkeitsgefälle berechnen.
Die Norm beschreibt durch Festlegung bestimmter Geometrieverhältnisse ein Standardfließbild zur Messung des Fließverhaltens von newtonschen und nichtnewtonschen Flüssigkeiten in Rotationsviskosimetern mit koaxialen Zylindern. Da es sich bei den Edukten und den Silan-modifizierten Produkten um strukturviskose Flüssigkeiten handelt, wurde die dynamische Viskosität aus drei Messungen bei jeweils 170°C bei unterschiedlichen Scherraten gemittelt (Scherrate 1: 192 1/s, Scherrate 2: 318 1/s, Scherrate 3: 532 1/s).

Die Schmelzenthalpie und die Glasübergangstemperatur wurden mittels Differentialkalorimetrie (DSC) nach ISO 11357-3 und nach nach ISO 113572 bestimmt. Die Bestimmung der Schmelzenthalpie, der Glasübergangstemperatur und des Schmelzbereichs des kristallinen Anteils erfolgt über DSC aus der 2. Aufheizkurve bei einer Heizrate von 10 K/min. Der Wendepunkt der Wärmestromkurve wird als Glasübergangstemperatur ausgewertet. Die Vermessung der modifizierten Polymere erfolgt im vorliegenden Fall stets ohne weitere Zusätze im unvernetzten Zustand, wobei sinnvoller Weise während der Messung eine Beschleierung mit trockenem Schutz- bzw. Inertgas (z.B. Stickstoff, Argon usw.) erfolgt.

Der Polydispersitätsindex PDI errechnet sich aus dem Quotienten aus gewichtsmittleren Molekulargewicht M_{w} und dem zahlenmittleren Molekulargewicht Mₙ und wurde gemäß der Norm ISO 16014-1 bestimmt.

Der Silizium-Gehalt wurde mittels Adsorptionsphotometrie an einem Lambda 35 Photometer der Firma Perkin Elmer ermittelt.
Hierfür wird die zu vermessende Probe wie folgt aufgeschlossen: Je nach Si-Gehalt werden 0,1 - 0,15 g des Polymers in einen Platintiegel eingewogen und mit 0,5 ml konzentrietrer Schwefelsäure versetzt. Die Flüssigkeit wird auf einer Heizplatte abgedampft und anschließend in einem Muffeloffen bei 600°C 1,5 bis 2 Std. verascht, wodurch sich Sulfatasche bildet. Anschließend wird die Sullfatasche mit möglichst wenig Natriumcarbonat in der Flamme aufgeschlossen und mit Millipore Wasser aus dem Platintiegel herausgelöst und in einen 100 ml Kunststoffmesskolben überspült.

Zur photometrische Bestimmung des Silizium-Gehalts der so aufgeschlossenen Probe werden 10 ml der aufgeschlossenen Lösung in einen 50 ml Kunststoffmesskolben pipettiert und mit 5 ml 2m Schwefelsäure versetzt um den pH-Wert einzustellen. Dann werden 10 ml Molybdat-Reagenz zugegeben und die Lösung mit Millipore Wasser auf 50 ml aufgefüllt.

Vor der Messung wird das Photometer nach folgender Vorschrift kalibriert: Es wird eine Kalibrierungsreihe mit den Konzentrationen 0, 1, 2, 4, 5 mg Si/l aus der Stammlösung in einen 50 ml Kolben pipettiert. Zur Einstellung des pH-Werts werden 5 ml 2 m Schwefelsäure zugegeben. Danach werden 10 ml Molybdat-Reagenz zugegeben und die Kalibrierlösungen in entsprechende Küvetten überführt. Nach 2 bis 10 Minuten am Photometer wird bei einer Wellenlänge von 400nm mit den Proben der Kalibrierungsreihe kalibriert. Zur Überprüfung der Kalibration wird ein externer Kontrollstandard mit der Konzentration von 5 mg Si/l analog vorbereitet und am Photometer gemessen.

Die Lösung der Probe, deren Silizium-Gehalt zu bestimmen ist, wird in eine Küvette überführt und nach 2 bis 10 Minuten am Photometer bei einer Wellenlänge von 400 nm gemessen.

Die Adhäsion wurde als Klebscherfestigkeit im Zugscherversuch nach DIN EN 1465 bestimmt.
Alle verwendeten Prüfkörper werden vor der Probenpräparation gereinigt und entstaubt. Alle Kunststoffprüfkörper und Glasprüfkörper werden zusätzlich vor der Probenpräparation mit einem geeigneten Reinigungsmittel entfettet. Anschließend erfolgt die Verklebung der Probenprüfkörper entsprechend Din EN 1465. Die Lagerung aller so hergestellten Prüfkörper vor der Verwendung erfolgt im Klimaschrank bei 20 °C und 50% rel. Luftfeuchte für 14 Tage. Dadurch wird ein gleichmäßiger Wassergehalt z.B. bei Holzprüfkürpern erreicht. Durch eine erhöhte Feuchtigkeit bedingte singulare Effekte z.B. bei hydrophilen bzw. hydrolyseempfindlichen Polymeren werden so ausgeschlossen bzw. minimiert.

Die Kohäsion wurde als Zugfestigkeit im Zugdehnversuch nach DIN EN ISO 527-3. bestimmt.

Die Propylenanteil und die PP-Triaden wurde mittels eines ¹³C-NMRs bestimmt, wobei die Quantifizierung mittels Integration des charakteristischen Signals durchgeführt wurde:
Die ¹³C-NMR-Spektren wurden an einem Varian Mercury-VX 400 (9,4 Tesla) NMRSpektrometer mittels eines 5 mm Probenkopfs (nuc4, 13C-empfindlich) aufgenommen. Die ¹³C-NMR-Messungen (Lamorfrequenz: 100,62 MHz) erfolgten unter quantitativen Bedingungen, d. h. Verwendung der inverse-gated-Pulssequenz. Weitere Parameter waren wie folgt: Spektrale Breite: 25 kHz; Aufnahmezeit: 1,3 s; Relaxationsdelay: 20 s; Anzahl der Scans: ca. 4000; Anregungswinkel: 90°; Messtemperat ur: 80° C.
Hierfür wurden jeweils ca. 50 mg des EP-Copolymers in 0,7 ml Lösungsmittel (20 % C6D6 /80 % 1,2,4-Trichlorbenzol) gelöst und homogenisiert.
Die Anteile der Triaden wurden entsprechend einer an ein PP/PE-Copolymer angepassten Markov-Wahrscheinlichkeitsstatistik berechnet.

Die Bruchdehnung der erfindungsgemäßen Schmelzklebemassen wurden nach ISO 527 bestimmt, mit der Ausnahme, dass jeweils ein nicht-normgemäßer Prüfkörper verwendet wurde, der durch Schmelzpressen erzeugt wurde und der sich von dem Prüfkörper gemäß Norm durch seine Maße unterscheidet. Die zur Messung von Festigkeit und Bruchdehnung verwendeten Prüfkörper weisen folgende Maße auf: Gesamtlänge: 50 mm, Breite des engen Teils: 3,3 mm, Breite an den Enden: 7 mm, Länge des engen parallelen Teils: 25 mm, Dicke: 1 mm.

Die Bruchdehnung entspricht der Zug-Festigkeit bei Bruch und wird nach ISO 527 durch einen Zug-Dehnungsversuch ermittelt. Hier wird bestimmt, welche Kraft pro Fläche (angegeben in MPa) für den Bruch des Prüfkörpers notwendig ist. Die Zugprüfung erfolgte mit Ausnahme des Prüfkörpers nach Norm ISO 527.

Die Erfindung wird durch die nachfolgenden Beispiele und Ansprüche näher erläutert.

### Ausführung der Beispiele:

Für die Pfropfung der in Spalte 2 und 3 aus Tabelle 1 aufgeführten mit Metallocenkatalysatoren hergestellten Polypropylencopolymere wurden jeweils 500 g des jeweiligen Polypropylencopolymers in einer mit Rührwerk, Innenthermometer und Destillationsbrücke ausgestatteten Glasapparatur unter Stickstoffüberlagerung aufgeschmolzen. In den Spalten 4 bis 6 finden sich die verfügbaren Daten zu den ungepfropften Vergleichspolyolefinen aus dem Stand der Technik.

**Tabelle 1**

| Basispolyolefin | Licocene PP 2602 | Licocene PP 1302 | Vestoplast 708 | WO2010/018027 Bsp. 6 | EP0827994 Bsp. 1 |
|---|---|---|---|---|---|
| Erweichungspunkt [°C] | ca. 90 | ca. 82 | ca. 106 ± 4 (aus TDS) | 102 | ca. 107 |
| Glasübergangstemperatur (Tg) [°C] | -29 | -32 | -33 | -39 | |
| Schmelzenthalpie (DSC) [J/g] | 38 | 35 | | 18,7 | |
| Gewichtsmittl. Molekulargewicht [g/mol] | 30.000 | 8.800 | 75.000 | | 92.000 |
| Polydispersitätsindex (PDI) [ ] | 1,7 | 1,7 | | | 4,1 |
| Dichte [g/cm3] | 0,900 | 0,900 | 0,87 | | |
| Schmelzvisosität bei 170°C [mPas] | 6.300 | 200 | 8.000 ± 2.000 (@190°C) | 68 000 (@190°C) | 50.000 (@190°C) |
| Propylenanteil [Gew.-%] | >75 | > 75 | | 84 | |
| Ethylentriaden Anteil [Gew.-%] | > 2,5 | > 2,5 | | 2,4 | |

Bei einer Temperatur von 160°C wurden im Laufe von 3 h aus einem Dosiertrichter kontinuierlich 50 g Trimethoxyvinylsilan (10% bezogen auf die eingesetzte Menge Polymer) zudosiert, gleichzeitig erfolgte aus einem zweiten Tropftrichter die kontinuierliche Zugabe von 10 g Di-tert.-butylperoxid. Nach Ende der Dosierung gab man weitere 1,1 g Di-tert.-butylperoxid zu dem Reaktionsgemisch und ließ 1 h bei 160°C nach reagieren.
Anschließend legte man Vakuum (ca. 30 mbar) an und destillierte die flüchtigen Anteile ab. Nach ca. 30 min wurde durch Einleiten von Stickstoff auf Normaldruck entspannt.

Die Eigenschaften der resultierenden Modifizierungsprodukte sind in Tabelle 2 in Spalte 2 und 3 angegeben. In den Spalten 4 bis 6 finden sich die verfügbaren Daten zu den gepfropften Polyolefinen aus dem Stand der Technik.

**Tabelle 2**

| Silan-modifiziertes Polypropylen-Copolymer | PP SI 1462 (Erf.) | PP SI 1362 (Vgl. DE10338344) | Vestoplast 206 | WO2010/018027 Bsp. 14 | EP0827994 Bsp. 1 |
|---|---|---|---|---|---|
| Erweichungspunkt [°C] | ca. 90 | ca. 82 | ca. 98 ± 4 (aus TDS) | | 98 |
| Glasübergangstem-peratur Tg [°C] | -29 | -32 | -28 (aus TDS) | | |
| Schmelzenthalpie [J/g] | 29 | 21 | 20 | | |
| Gewichtsmitt. Molekulargewicht [g/mol] | 12.300 | 8.800 | 38.000 (aus TDS) | | 38.000 |
| Polydispersitätsindex (PDI) [ ] | 2,3 | 2,0 | 2,6 | | 2,6 |
| Si-Gehalt [Gew.-%] | 1,4 - 1,8 | 1,4 - 1,8 | 0,5 | 0,43 (RFA-Spektrosko pie) | 6% VTMO eingesetzt |
| Dichte: [g/cm3] | 0.900 | 0.900 | 0.87 | | |
| Schmelzviskosität (bei 170°C) [mPas] | 1.000 | 110 | 5.000 ±1.000 (aus TDS) | 2.000 (bei 190°C) | 6.000 (bei 190 °C) |
| Propylen-anteil [Gew.-%] | >75 | > 75 | | 84 | |
| Ethylentriaden Anteil [Gew.-%] | > 2,5 | > 2,5 | | 2,4 | |

### Herstellung von Schmelzklebstoffformulierungen und Verklebung verschiedener Substrate.

Zur Herstellung der erfindungsgemäßen Schmelzklebeformulierungen wurden Schmelzmischungen des Silan-modifizierte Polypropylen-Copolymers und der in Tabelle 3 angegebenen, weiteren Komponenten in den dort angegebenen Gewichtsanteilen durch heißes Schmelzmischen (Ca. 180°C) mit einem Propellerrührer hergestellt.

**Tabelle 3**

| Schmelzklebeformulierung | Bsp.1 (Vgl.) | Bsp.2 (Erf.) | Bsp.3 (Vgl.) | Bsp.4 (Vgl.) | Bsp.5 (Erf.) | Bsp.6 (Vgl.) | Bsp.7 (Vgl.) | Bsp.8 (Erf.) | Bsp. 9 (Vgl.) |
|---|---|---|---|---|---|---|---|---|---|
| PP 2602 [Gew.-%] | | | | 74,5 | 74,5 | 74,5 | 54,5 | 54,5 | 54,5 |
| SI 1362 [Gew.-%] | 99,5 | | | 25,0 | | | 25,0 | | |
| SI 1462 [Gew.-%] | | 99,5 | | | 25,0 | | | 25,0 | |
| Vestoplast 206 [Gew.-%] | | | 99,5 | | | 25,0 | | | 25,0 |
| SU 400 [Gew.-%] | | | | | | | 20,0 | 20,0 | 20,0 |
| | | | | | | | | | |
| Hordaphos MDAH [Gew.-%] | 0,5 | 0,5 | 0,5 | 0,5 | 0,5 | 0,5 | 0,5 | 0,5 | 0,5 |
| Total [Gew.-%] | 100 | 100 | 100 | 100 | 100 | 100 | 100 | 100 | 100 |
| | | | | | | | | | |
| Visc, @170 °C [mPas] | 200 | 1.000 | 12.000 | 2.400 | 4.300 | 8.000 | 1.590 | 2.800 | 5.300 |
| Zugfestigkeit [MPa] | 2,4 | 5,8 | 3,6 | 6,0 | 7,0 | 4,5 | 4,0 | 5,1 | 3,6 |
| Bruchdehnung [%] | 13 | 34 | 442 | 128 | 206 | 143 | 149 | 206 | 530 |
| Wärmebeständigkeit [°C] | 200 | 200 | 200 | 90 | 160 | 80 | 80 | 200 | 90 |
| | | | | | | | | | |
| Klebscherfestig -keit [MPa] | | | | | | | | | |
| PP | 1,0 | 1,3 | 2,9 | 1,7 | 1,7 | 2,9 | 3,8 | 3,4 | 3,4 |
| ABS | 0,7 | 0,8 | 1,6 | 0,4 | 0,7 | 0,5 | 2,9 | 3,0 | 2,7 |
| Holz | 4,1 | 7,1 | 4,0 | 3,6 | 5,1 | 1,1 | 5,0 | 5,9 | 3,3 |
| Glass | | | | | 3,6 | 0,7 | n.b. | 3,8 | 0,3 |

In obigen Schmelzkleberezepturen sieht man bei den erfindungsgemäßen Beispielen 2, 5 und 8, dass bei niedriger Viskosität der Formulierung sowohl eine erhöhte Kohäsion (Zugfestigkeit), Bruchdehnung, Wärmebeständigkeiten wie auch Adhäsion (Klebscherfestigkeit) auf verschiedenen Substraten, insbesondere auf Holz erreicht werden kann. Bei Verwendung des Silan-modifizierten Polypropylen-Copolymers als einzigem Bestandteil eines Schmelzklebers ist die erfindungsgemäße Silan-modifizierte Komponente den Vergleichsbeispielen auf Holz deutlich überlegen. Auch auf Polypropylen (PP) und ABS zeigt die erfindungsgemäße Komponenten in Reinform eine gute Adhesion und ist in Bezug auf die Kohäsion gegenüber den Vergleichsbeispielen 1 und 3 deutlich verbessert.

Diese schon in Reinform günstigen Eigenschaften entfalten ihr gesamtes Potential in der Formulierung. Die erfindungsgemäßen Beispiele 5 und 8 weisen bei gleicher Konzentration der reaktiven Komponente in der Formulierung eine viel niedrigere Viskosität auf, was das Verarbeitungsspektrum des Anwenders deutlich verbessert und erweitert und zeigen darüber hinaus eine sehr viel höhere Wärmebeständigkeit und eine deutlich verbesserte Kohäsion, Adhäsion und Bruchdehnung als die Vergleichsbeispiele 4,6,7 und 9.

## Patentansprüche

1. Silan-modifiziertes Polypropylen-Copolymer, welches Ethylen und/oder 1-Buten, bevorzugt Ethylen oder 1-Buten, besonders bevorzugt Ethylen als Comonomer enthält und einen photometrisch ermittelten Silizium-Gehalt zwischen 1 und 5 Gew.-%, bezogen auf den Gesamtmasse des Polymers, eine Schmelzviskosität, gemessen nach DIN 53019 bei 170°C, von größer als 500 mPas und kleiner als 4500 mPas und eine Schmelzenthalpie, gemessen nach nach ISO 11357-3, größer als 20 J/g und kleiner als 35 J/g, bevorzugt größer als 20 J/g und kleiner als 30 J/g, aufweist.

2. Silanmodifiziertes Polypropylen-Copolymer nach Anspruch 1, **dadurch gekennzeichnet, dass** die Schmelzviskosität, gemessen nach DIN 53019 des Silan-modifizierten Polypropylen-Copolymers zwischen 10% und 50% der Ausgangsviskosität des unmodifizierten Polypropylen-Copolymers beträgt.

3. Silan-modifiziertes Polypropylen-Copolymer nach Anspruch 1 oder 2, **dadurch gekennzeichnet, dass** das Polypropylen-Copolymer Backbone ein gewichtsmittleres Molekulargewicht, gemessen nach ISO 16014-1, von größer als 10.000 und kleiner als 30.000 g/mol, bevorzugt größer als 10.000 und kleiner als 20.000 g/mol

4. Silan-modifiziertes Polypropylen-Copolymer nach einem der vorhergehenden Ansprüche, **dadurch gekennzeichnet, dass** es einen Polydispersitätsindex (PDI), bestimmt gemäß der Norm ISO 16014-1, von kleiner als 2,5 aufweist und sich der PDI durch die Pfropfung gegenüber dem unmodifizierten Polypropylen-Copolymer erhöht, wobei die Erhöhung bevorzugt mindestens 20% des Ausgangswerts beträgt.

5. Silan-modifiziertes Polypropylen-Copolymer nach einem der vorhergehenden Ansprüche, **dadurch gekennzeichnet, dass** es einen Erweichungspunkt, gemessen nach ASTM D 3104, zwischen 85 und 95°C aufweist.

6. Silan-modifiziertes Polypropylen-Copolymer nach einem der vorhergehenden Ansprüche, **dadurch gekennzeichnet, dass** es eine Dichte größer 0,900 g/cm3, gemessen nach ISO 1183-3:1999 aufweist.

7. Silan-modifiziertes Polypropylen-Copolymer nach einem der vorhergehenden Ansprüche, **dadurch gekennzeichnet, dass** die mm-Triade des Propylenanteils, welche mit Hilfe eine ¹³C-NMRs ermittelt wurde, kleiner oder gleich 90 Mol% und die rr-Triade mindestens 5 Mol% beträgt.

8. Silan-modifiziertes Polypropylen-Copolymer nach einem der vorhergehenden Ansprüche, **dadurch gekennzeichnet, dass** das unmodifizierte Edukt einem Propylenanteil, welcher mit Hilfe eine ¹³C-NMRs ermittelt wurde, von mindestens 60 Mol.-% Propylen aufweist.

9. Verfahren zur Herstellung eines Silan-modifizierten Polypropylen-Copolymers gemäß einem der vorhergehenden Ansprüche, umfassend die Schritte
a) Bereitstellen eines unmodifizierten Polypropylen-Copolymers
b) Zugabe der Silan-Pfropfkomponente und des radikalischen Initiators.
c) Verdampfen des überschüssigen Monomers,
dadurch gekenzeichnet, dass es durch die Pfropfrektion zu einer Abnahme der Schmelzviskosiät, gemessen nach DIN 53019 bei 170°C, um 50 - 90% der Ausgangsviskosität des ummodifizierten Polypropylen-Copolymers und einer Erhöhung des PDIs, bestimmt gemäß der Norm ISO 16014-1, um mindestens 20% kommt.

10. Verfahren gemäß Anspruch 9, **dadurch gekennzeichnet, dass** das unmodifizierte Polypropylen-Copolymer eine Schmelzviskosität, gemessen nach DIN 53019 bei 170°C, zwischen 500 und 7.000 mPas, bevorzugt zwischen 700 und 5.000 mPas, besonders bevorzugt zwischen 800 und 4.000 mPas, und eine Schmelzenthalpie, gemessen nach ISO 11357-3, zwischen 30 J/g und 55 J/g aufweist.

11. Schmelzklebeformulierung, umfassend ein silanmodifiziertes Polypropylencopolymer gemäß einem der Ansprüche 1-8 und ein oder mehrere Basispolymere ausgewählt aus der Gruppe bestehend aus nicht-modifizierten Polyolefinen und nicht-modifizierten, thermoplastischen Styrolblockcopolymeren (TPE-S), wobei diese Komponenten zusammen mindestens 50 Gew.-% der Schmelzklebeformulierung bilden und das Silanmodifizierte Polyolefin zu höchstens 30 Gew.-%, bezogen auf das Gesamtgewicht der Schmelzklebeformulierung, eingesetzt wird.

12. Schmelzklebeformulierung nach Anspruch 11, **dadurch gekennzeichnet, dass** diese eine Schmelzviskosität bei 170°C, gemessen nach DIN 53019, von kleiner 5000 mPas und eine Zugfestigkeit, gemessen nach DIN EN ISO 527-3, von mindestens 4 MPa aufweist.

13. Schmelzklebeformulierung nach einem der Ansprüche 11 bis 12, **dadurch gekennzeichnet, dass** diese weniger als 35% Klebrigmacher, bezogen auf die Gesamtmasse der Schmelzklebeformulierung enthält.

14. Schmelzklebeformulierung nach einem der Ansprüche 11 bis 13, **dadurch gekennzeichnet, dass** diese, bezogen auf die Gesamtmasse der Schmelzklebeformulierung, 40 - 80 Gew.-% Basispolymer, 10-30 Gew.-% Silan-modifiziertes Polypropylen-Copolymer und 10- 30 Gew.-% Klebrigmacher enthält.

15. Silan-modifiziertes Polypropylen-Copolymer nach einem der Ansprüche 1-8 oder Schmelzklebeformulierung nach einem der Ansprüche 11 bis 14, **dadurch gekennzeichnet, dass** das Silan-modifiziertes Polypropylen-Copolymer oder die Schmelzklebeformulierung einen Vernetzungsbeschleuniger in einer Menge von 0,1 -1 Gew.-%, bezogen auf die Gesamtmenge der Mischung aus Silan-modifiziertem Polypropylen-Copolymer und Vernetzungsbeschleuniger oder der Schmelzklebeformulierung, umfasst.

16. Verwendung eines Silan-modifiziertes Polypropylen-Copolymer nach einem der Ansprüche 1 bis 8 oder einer Schmelzklebeformulierung nach einem der Ansprüche 11 bis 15 zur Verklebung von Substraten.
